(19) Europäisches Patentamt
European Patent Office
Office européen des brevets

(11) Veröffentlichungsnummer: **0 270 997**
**A2**

# (12) EUROPÄISCHE PATENTANMELDUNG

(21) Anmeldenummer: **87117862.0**

(22) Anmeldetag: **03.12.87**

(51) Int. Cl.⁴: **C08L 77/00**, C08L 65/00, C08L 71/00

(30) Priorität: **04.12.86 DE 3641498**

(43) Veröffentlichungstag der Anmeldung: **15.06.88 Patentblatt 88/24**

(84) Benannte Vertragsstaaten: **BE DE FR GB NL**

(71) Anmelder: **BASF Aktiengesellschaft**
**Carl-Bosch-Strasse 38**
**D-6700 Ludwigshafen(DE)**

(72) Erfinder: **Lausberg, Dietrich, Dr.**
**Nachtigalstrasse 32a**
**D-6700 Ludwigshafen(DE)**
Erfinder: **Seiler, Erhard, Dr.**
**Erpolzheimer Strasse 1**
**D-6700 Ludwigshafen(DE)**
Erfinder: **Plachetta, Christoph, Dr.**
**Albert-Einstein-Allee 12**
**D-6703 Limburgerhof(DE)**

## (54) Thermoplastische Formmassen auf der Basis von Polyamiden und Polyaryletherketonen.

(57) Thermoplastische Formmassen, enthaltend als wesentliche Komponenten,
A) 2 bis 98 Gew.% eines Polyamids
B) 2 bis 98 Gew.% eines Polyaryletherketons sowie darüber hinaus

C) 0 bis 60 Gew.% faser-und/oder teilchenförmige Füllstoffe.

EP 0 270 997 A2

BASF Aktiengesellschaft O.Z. 0050/38829

D

Thermoplastische Formmassen auf der Basis von Polyamiden und Polyaryletherketonen

Beschreibung

Die Erfindung betrifft thermoplastische Formmassen, enthaltend als wesentliche Komponenten,

A) 2 bis 98 Gew.% eines Polyamids
B) 2 bis 98 Gew.% eines Polyaryletherketons

sowie darüber hinaus

C) 0 bis 60 Gew.% faser- und/oder teilchenförmige Füllstoffe.

Weiterhin betrifft die Erfindung die Verwendung derartiger Formmassen zur Herstellung von Formkörpern und Formkörper, die diese Formmassen als wesentliche Komponenten enthalten.

Polyaryletherketone sind teilkristalline Polymere mit hervorragenden Eigenschaften, insbesondere Spannungsrißbeständigkeit, Hochtemperaturbeständigkeit, Abriebfestigkeit und Zähigkeit. Ein Problem ist jedoch die Verarbeitung, die bei Temperaturen im Bereich von 400°C erfolgen muß.

Polyamide zeichnen sich durch gute mechanische Eigenschaften aus, die jedoch insgesamt das Niveau von Polyaryletherketonen nicht erreichen. Die Verarbeitung von Polyamiden ist jedoch wesentlich einfacher als bei Polyaryletherketonen.

Es war deshalb die technische Aufgabe gestellt, thermoplastische Formmassen aus Polyamiden und Polyaryletherketonen zur Verfügung zu stellen, die sich durch gute mechanische Eigenschaften, insbesondere Biegefestigkeit, Reißfestigkeit und Elastizitätsmodul auszeichnen und darüber hinaus eine gute Lösungsmittelbeständigkeit und geringe Anfälligkeit gegenüber Spannungsrißkorrosion aufweisen. Außerdem sollten die Formmassen besser verarbeitbar sein als Polyaryletherketone.

Diese Aufgabe wird erfindungsgemäß durch die eingangs definierten thermoplastischen Formmassen gelöst.

Bevorzugte Massen dieser Art sind den Unteransprüchen zu entnehmen.

Als Komponente A) enthalten die erfindungsgemäßen thermoplastischen Formmassen ein Polyamid oder Mischungen aus mehreren Polyamiden. Geeignet sind grundsätzlich teilkristalline und amorphe Polyamide, es werden jedoch teilkristalline Polyamide bevorzugt, da die daraus hergestellten Formmassen in der Regel solchen aus amorphen Polyamiden hinsichtlich der Wärmeform- und Spannungsrißbeständigkeit überlegen sind. Erfindungsgemäß einsetzbare Polyamide sind an sich bekannt und umfassen z.B. Polyamide mit Molekulargewichten von 5000 oder mehr, wie sie z.B. in den amerikanischen Patentschriften 2 071 250, 2 071 251, 2 130 523, 2 130 948, 2 241 322, 2 312 966, 2 512 906 und 3 393 210 beschrieben sind.

Die Polyamide können z.B. durch Kondensation äquimolarer Mengen einer gesättigten Dicarbonsäure mit 4 bis 12 Kohlenstoffatomen, mit einem Diamin, welches 4 bis 14 Kohlenstoffatome aufweist, hergestellt werden, oder durch Kondensation von Ω-Aminocarbonsäuren oder durch Polyaddition von Lactamen. Beispiele für Polyamide sind Polyhexamethylenadipinsäureamid (Nylon 66), Polyhexamethylenazelainsäureamid (Nylon 69), Polyhexamethylensebacinsäureamid (Nylon 610), Polyhexamethylendodecandisäureamid (Nylon 612), die durch Ringöffnung von Lactamen erhaltenen Polyamide, wie Polycaprolactam, Polylaurinsäurelactam, ferner Poly-11-aminoundecansäure und Di-(p-aminocyclohexyl)-methandodecandisäureamid. Es ist auch möglich, gemäß der Erfindung Polyamide zu verwenden, die durch Copolykondensation von zwei oder mehr der oben genannten Polymeren oder ihrer Komponenten hergestellt worden sind, z.B. ein Copolymeres aus Adipinsäure, Isophthalsäure und Hexamethylendiamin. Vorzugsweise sind die Polyamide linear und haben Schmelzpunkte von mehr als 200°C.

Bevorzugte Polyamide sind Polyhexamethylenadipinsäureamid, Polyhexamethylensebacinsäureamid und Polycaprolactam. Die Polyamide weisen im allgemeinen eine relative Viskosität von 2,0 bis 5 auf, bestimmt an einer 1 gew.%igen Lösung in $H_2SO_4$ bei 23°C, was einem Molekulargewicht (Gewichtsmittelwert) von etwa 15000 bis 45000 entspricht. Selbstverständlich können auch Mischungen von Polyamiden eingesetzt werden. Der Anteil des Polyamids A an den erfindungsgemäßen Formmassen beträgt 2 bis 98 Gew.%, bezogen auf das Gesamtgewicht. Formmassen mit einem Gehalt von 10 bis 78, insbesondere 20 bis 67 Gew.% an Polyamid werden besonders bevorzugt.

Als Komponente B enthalten die erfindungsgemäßen Formmassen ein Polyaryletherketon oder eine Mischung mehrerer Polyaryletherketone. Unter Polyaryletherketonen sind hierbei Homo- und Copolykondensate zu verstehen, die an aromatische Reste gebundene Carbonylgruppen in der Hauptkette

enthalten und deren sich wiederholende Einheiten über Etherbrücken verknüpft sind.

Bevorzugt werden Polyaryletherketone mit wiederkehrenden Einheiten der allgemeinen Formeln I bis V eingesetzt:

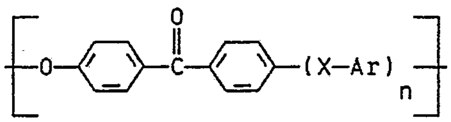

(I)

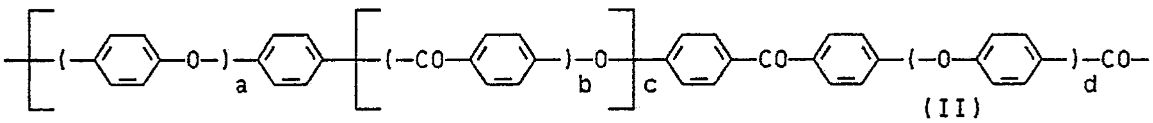

(II)

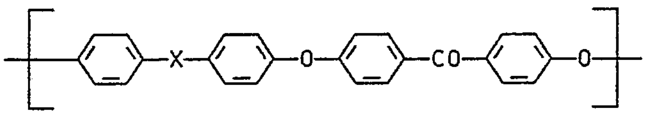

(III)

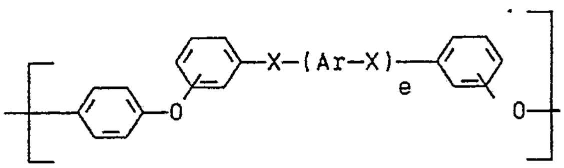

(IV)

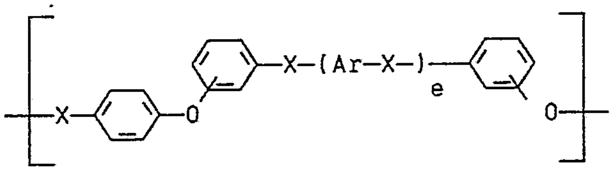

(V)

wobei

Ar Phenylen, Diphenylen oder Naphthylen sein kann,

X O, -CO- oder eine direkte chemische Bindung darstellt,

a eine ganze Zahl zwischen 1 und 4 ist und

b, c, d und e jeweils den Wert 0 oder 1 haben können.

Alle aromatischen Einheiten in den allgemeinen Formeln I bis V können mit $C_1$-$C_8$-Alkylgruppen, $C_1$-$C_8$-Alkoxygruppen, Cl oder F substituiert sein.

Von den unter die Formeln I bis V fallenden Polyaryletherketonen werden solche mit den folgenden wiederkehrenden Einheiten besonders bevorzugt:

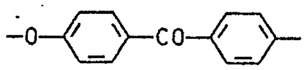

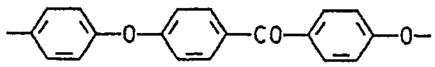

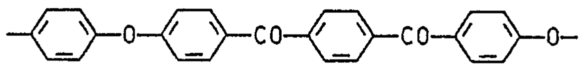

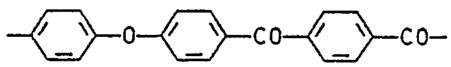

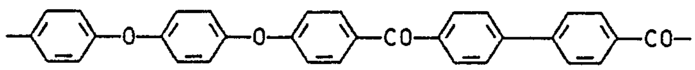

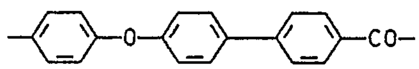

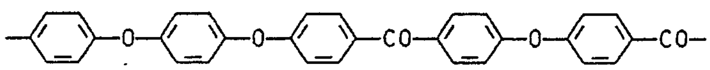

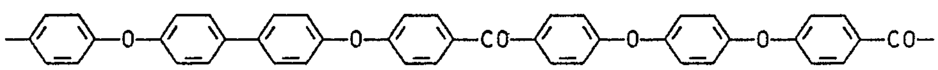

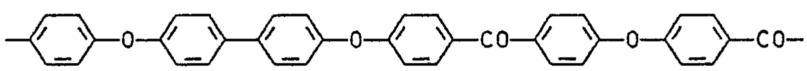

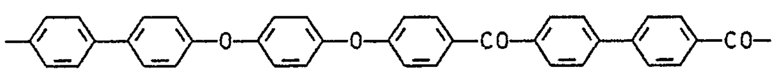

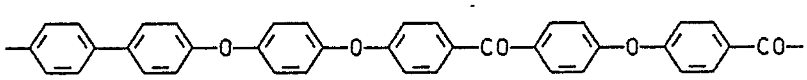

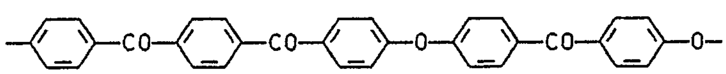

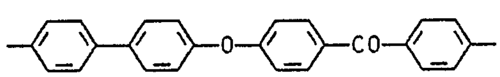

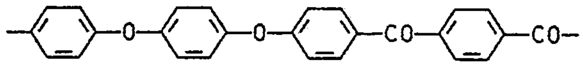

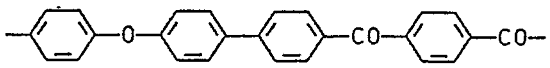

Neben den Etherketonbausteinen können die in den erfindungsgemäßen Formmassen eingesetzten Polyaryletherketone noch Aryletherstrukturen enthalten, wie sie z.B. aus Polyarylethersulfonen bekannt sind. Hier seien als Beispiele genannt

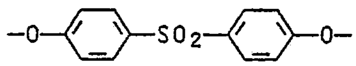

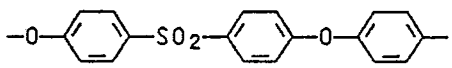

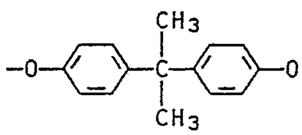

Weitere Einheiten sind z.B. in der DE-OS 30 14 230 beschrieben. Der Anteil derartiger Einheiten beträgt im allgemeinen bis zu 50 mol%, insbesondere bis zu 40 mol%, bezogen auf die Gesamtzahl der wiederkehrenden Einheiten in den Polyaryletherketonen.

Die Herstellung derartiger Polyaryletherketone ist an sich bekannt und in der Literatur, z.B. der DE-AS 15 45 106, DE-OS 19 57 091, DE-OS 27 31 816, der CA-PS 847 963 und der bereits erwähnten DE-OS 30 14 230 beschrieben, so daß sich hier nähere Angaben erübrigen. Es sei nur erwähnt, daß grundsätzlich die nukleophile Polykondensation von Dihydroxy- mit Dihalogenverbindungen als auch elektrophile Herstellungsverfahren (Friedel-Crafts-Acylierung) geeignet sind.

Die Polyaryletherketone weisen im allgemeinen Molekulargewichte (Gewichtsmittel) von 10.000 bis 100.000, vorzugsweise von 15.000 bis 50.000 und Grenzviskositäten (gemessen bei 20°C in 1 gew.%iger Lösung in 96 gew.%iger $H_2SO_4$ von 0,4 bis 1,6, vorzugsweise von 0,8 bis 1,4 auf.

Der Gehalt der erfindungsgemäßen Formmassen an der Komponente B beträgt wie der der Komponente A 2 bis 98 Gew.%; Gehalte von 20 bis 88, insbesondere 30 bis 75 Gew.% B, bezogen auf das Gesamtgewicht der Komponenten A bis C werden bevorzugt.

Als weitere Komponente C können die erfindungsgemäßen Formmassen bis zu 60 Gew.%, bezogen auf A bis C, an faser- und/oder teilchenförmigen Füllstoffen enthalten.

Als verstärkend wirkende Füllstoffe seien beispielsweise Asbest, Kohle und vorzugsweise Glasfasern genannt, wobei die Glasfasern z.B. in Form von Glasgeweben, -matten, -vliesen und/oder vorzugsweise Glasseidenrovings oder geschnittener Glasseide aus alkaliarmen E-Glasen mit einem Durchmesser von 5 bis 200 µm, vorzugsweise 8 bis 15 µm, zur Anwendung gelangen, die nach ihrer Einarbeitung eine mittlere Länge von 0,05 bis 1 mm, vorzugsweise 0,1 bis 0,5 mm, aufweisen.

Andere geeignete Füllstoffe sind z.B. Wollastonit, Calciumcarbonat, Glaskugeln, Quarzmehl, Si- und Bornitrid, amorphe Kieselsäure, Asbest, Magnesiumcarbonat, Calciumsilicat, Calciummetasilicat, Kaolin, Glimmer und Feldspat oder Mischungen dieser Füllstoffe.

Von den vorstehend genannten verstärkenden Füllstoffen haben sich insbesondere Glasfasern als vorteilhaft herausgestellt, besonders dann, wenn eine sehr hohe Wärmeformbeständigkeit gefordert ist.

Der Anteil der Komponente C beträgt 0 bis 60, vorzugsweise 2 bis 50 und insbesondere 5 bis 30 Gew.%, bezogen auf das Gesamtgewicht der Formmassen.

Neben den Komponenten A bis C können die erfindungsgemäßen Formmassen übliche Zusatzstoffe und Verarbeitungshilfsmittel (Komponente D) enthalten. Deren Anteil beträgt im allgemeinen bis zu 60, vorzugsweise bis zu 50 Gew.%, bezogen auf das Gesamtgewicht der Komponenten A bis C.

Übliche Zusatzstoffe sind beispielsweise Stabilisatoren und Oxidationsverzögerer, Mittel gegen Wärmezersetzung und Zersetzung durch ultraviolettes Licht, Gleit- und Entformungsmittel, Färbemittel, wie Farbstoffe und Pigmente, Keimbildungsmittel und Weichmacher.

Oxidationsverzögerer und Wärmestabilisatoren, die den thermoplastischen Massen gemäß der Erfindung zugesetzt werden können, sind z.B. Halogenide von Metallen der Gruppe I des periodischen Systems, z.B. Natrium-, Kalium-, Lithium-Halogenide, ggf. in Verbindung mit Kupfer-(I)-Halogeniden, z.B. Chloriden, Bromiden oder Iodiden. Ferner sind sterisch gehinderte Phenole, Hydrochinone, substituierte Vertreter dieser Gruppe und Mischungen derselben, vorzugsweise in Konzentrationen bis 1 Gew.%, bezogen auf das Gewicht der Mischung, einsetzbar.

Beispiele für UV-Stabilisatoren sind verschiedene substituierte Resorcine, Salicylate, Benzotriazole und Benzophenone, die im allgemeinen in Mengen bis zu 2,0 Gew.% eingesetzt werden.

Gleit- und Entformungsmittel, die in der Regel in Mengen bis zu 1 Gew.% der thermoplastischen Masse zugesetzt werden, sind Stearinsäuren, Stearylalkohol, Stearinsäureester und -amide sowie die Fettsäureester des Pentaerythrits.

Ferner können organische Farbstoffe, wie Nigrosin, Pigmente, z.B. Titandioxid, Cadmiumsulfid, Cadmiumsulfidselenid, Phthalocyanine, Ultramarinblau oder Ruß zugesetzt werden. Keimbildungsmittel, wie Talkum, Calciumfluorid, Natriumphenylphosphinat, Aluminiumoxid oder feinteiliges Polytetrafluorethylen können in Mengen z.B. bis zu 5 Gew.%, bezogen auf die Komponenten A bis C angewandt werden.

Die Herstellung der erfindungsgemäßen Formmassen kann nach an sich bekannten Mischverfahren z.B. durch Einarbeiten des Polyaryletherketons in das Polyamid bei Temperaturen oberhalb des Schmelzpunkts des Polyaryletherketons erfolgen, insbesondere bei Temperaturen von 320 bis 400°C, besonders bei 330 bis 380°C, in üblichen Mischvorrichtungen, wie Extrudern, Knetern und Mischern. Die Komponenten C und D, die gegebenenfalls enthalten sind, werden entsprechend zugegeben.

Aus den erfindungsgemäßen Formmassen lassen sich leicht Formkörper mit guter Oberflächenbeschaffenheit und verbesserter Schlagzähigkeit bei

hoher Steifigkeit, insbesondere bei tiefen Temperaturen, herstellen. Weder im Formörper noch in der Schmelze tritt eine Entmischung der Polymerkomponenten ein.

Beispiele

Zur Herstellung von erfindungsgemäßen thermoplastischen Formmassen wurden folgende Ausgangsstoffe eingesetzt.

Komponente A (Polyamide):

A 1: Polyhexamethylenadipinamid mit einer relativen Viskosität von 3,31, gemessen an einer 1 %igen Lösung in 96 % $H_2SO_4$ bei 25°C

A 2: Polycaprolactam mit einer relativen Viskosität von 4,0 (gemessen wie bei A 1)

A 3: Polyhexamethylensebacinsäureamid mit einer relativen Viskosität von 3,23 (gemessen wie bei A 1)

A 4: Polyamid, hergestellt aus Hexamethylendiamin und einem Gemisch aus Isophthalsäure und Terephthalsäure (Gew.-Verh. 60/40) mit einer relativen Viskosität von 1,91 gemessen an einer 1 gew.%igen Lösung in konzentrierter Schwefelsäure bei 25°C.

Komponente B

B1: Polyaryletherketon mit wiederkehrenden Einheiten

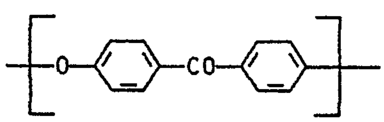

mit einer Grenzviskosität [$\eta$] = 1,2 dl/g, gemessen in 1 gew.%iger Lösung in 96 gew.%iger Schwefelsäure bei 25°C.

B2: Polyaryletherketon mit wiederkehrenden Einheiten

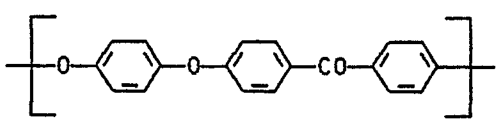

mit einer Grenzviskosität [$\eta$] = 0,9 dl/g (gemessen wie bei B 1).

Die Formmassen wurden hergestellt, indem die Komponenten intensiv gemischt, in einem Zweischneckenextruder bei 350°C aufgeschmolzen, homo-

genisiert und in ein Wasserbad extrudiert wurden. Nach Granulierung und Trocknung wurde die Mischung auf einer Spritzgußmaschine zu Prüfkörpern geformt und diese ohne weitere Nachbehandlung untersucht.

Die Fließlänge wurde durch Einspritzen der Formmassen bei der in der Tabelle angegebenen Temperatur und einem Spritzdruck von 90 bar (9 MPa) in ein Fließspiralwerkzeug (Dicke 1 mm, Werkzeugtemperatur 80°C) ermittelt.

Die Zugfestigkeit wurde an Zugstäben nach DIN 53 455 gemessen.

Die Wärmeformbeständigkeit wurde an Flachstäben nach ASTM ISO 75, Methode A, bestimmt.

Die Zusammensetzung der eingesetzten Formmassen und die Meßergebnisse sind in der Tabelle dargestellt.

Tabelle (alle Mengenangaben in Gew.%)

| Beispiel | Komponente A | Komponente B | Fließlänge cm | Fließlänge °C | Zugfestigkeit [N/mm²] | Wärmeformbeständigkeit [°C] |
|---|---|---|---|---|---|---|
| 1V[1] | - | 100 $B_1$ | 11 | 380 | 81 | 167 |
| 2V | - | 100 $B_2$ | 13 | 380 | 90 | 155 |
| 3V | 100 $A_1$ | - | 27 | 280 | 85 | 105 |
| 4V | 100 $A_2$ | - | 25 | 280 | 80 | 86 |
| 5V | 100 $A_3$ | - | 31 | 280 | 70 | 85 |
| 6V | 100 $A_4$ | - | 22 | 280 | 82 | 112 |
| 7 | 50 $A_1$ | 50 $B_1$ | 37 | 350 | 92 | 151 |
| 8 | 50 $A_1$ | 50 $B_2$ | 39 | 350 | 91 | 139 |
| 9 | 50 $A_2$ | 50 $B_2$ | 46 | 350 | 88 | 137 |
| 10 | 50 $A_3$ | 50 $B_2$ | 53 | 350 | 85 | 133 |
| 11 | 50 $A_4$ | 50 $B_2$ | 35 | 350 | 94 | 145 |
| 12 | 25 $A_1$ | 75 $B_2$ | 31 | 350 | 89 | 151 |
| 13 | 75 $A_1$ | 25 $B_2$ | 67 | 350 | 87 | 122 |

[1] Vergleichsbeispiele

Patentansprüche

1. Thermoplastische Formmassen, enthaltend als wesentliche Komponenten,

A) 2 bis 98 Gew.% eines Polyamids

B) 2 bis 98 Gew.% eines Polyaryletherketons

sowie darüber hinaus

C) 0 bis 60 Gew.% faser- und/oder teilchenförmige Füllstoffe.

2. Thermoplastische Formmassen nach Anspruch 1, enthaltend 2 bis 50 Gew.% daß der Komponente C).

3. Verwendung der thermoplastischen Formmassen gemäß den Ansprüchen 1 und 2 zur Herstellung von Formkörpern.

4. Formkörper, enthaltend als wesentliche Komponenten Formmassen gemäß den Ansprüchen 1 und 2.